# EUROPEAN PATENT SPECIFICATION

(11) **EP 0 580 600 B1**
(45) Date of publication and mention of the grant of the patent: **08.10.1997**
(21) Application number: 92905684.4
(22) Date of filing: 15.01.1992
(51) Int. Cl.: G06F 13/42

(54) **APPARATUS FOR DRIVING BOTH SINGLE-ENDED AND DIFFERENTIAL COMPUTER BUSES**
ANORDNUNG ZUM TREIBEN VON DIFFERENTIELLEN UND UNSYMMETRISCHEN RECHNERBUSSEN
APPAREIL DE COMMANDE DE BUS INFORMATIQUES A LA FOIS ASYMETRIQUES ET DIFFERENTIELS

(30) Priority: 17.04.1991 US 686722
(43) Date of publication of application: 02.02.1994
(73) Proprietor: WANG LABORATORIES, INC., Billerica, MA 01821 (US)
(72) Inventor: FLEMING, Caroline, M., Groton, MA 01450 (US)
(74) Representative: Behrens, Dieter, Dr.-Ing.
(86) International application number: US9200268
(87) International publication number: WO9218934

(56) References cited:
- EP-A- 0 330 044
- US-A- 4 864 291
- WESCON PROCEEDINGS SAN FRANCISCO, CA,US vol. 29, November 1985, NEWYORK,USA pages 1 - 11; KEITH DULAC: 'Design Consideratioms for a SCSI Disk Controller Chip'

## Description

### BACKGROUND OF THE INVENTION

### 1. Field of the Invention

The present invention relates generally to digital data processing systems and more specifically to input/output (I/O) digital apparatus and method employed in the systems. Digital data processing systems, i.e. digital computers, communicate with peripheral devices such as disk drives for storing and retrieving data, scanners for inputing documents, and printers for printing documents. The present invention is directed to communications between a computer and a peripheral or another computer using method and apparatus associated with the Small Computer Systems Interface.

### 2. Background Information

Because a customer may have a computer of one manufacturer and a peripheral of another, standards have been adopted to foster the coupling together of peripherals from different vendors. One widely accepted standard is the Small Computer Systems Interface (SCSI) which may be thought of as the specification for a computer I/O bus. A SCSI bus is defined by the American National Standards Institute (ANSI) in SCSI-1 Specification X3T9.2 Rev. 17B. To communicate via a SCSI bus, bus controlling circuitry in a host computer and counterpart circuitry in a coupled peripheral device must conform to the SCSI standard. The SCSI specification allows for up to eight devices to be coupled to one particular SCSI bus. Each device must arbitrate for control of a SCSI bus to perform a bus operation.

This invention is primarily directed towards a standard SCSI bus I/O controller. In the present invention the SCSI controller of interest resides in the computer. Each SCSI controller board can control two SCSI buses independently of each other with two separate SCSI controller integrated circuits (chips) and adapter cards or boards (the term "card" is interchangeable with the term "board"). The SCSI controller chips provide all necessary control signals as described in the SCSI specification to pass eight bits of data or address, one parity bit, and SCSI bus control signals between the SCSI controller board and a coupled SCSI device.

SCSI controller chips are sold by companies such as National Cash Register (NCR), Western Digital, and Texas Instruments. The SCSI specification defines two incompatible electrical signal formats, single-ended and differential, that are central to understanding this invention.

The single-ended signal format requires all SCSI bus signals to be electrically referenced to ground. A differential signal format requires all SCSI bus signals to be electrically referenced to a logical inversion of themselves. Consequently, each SCSI controller board must be coupled to a peripheral that uses the same signal format. It is important to observe that a SCSI cable carrying single-ended format signals can be up to six meters (approximately twenty feet) in length, while a SCSI cable carrying differential format signals can be up to twenty five meters (approximately eighty-two feet) in length, as established in the SCSI specification.

Because the single-ended and differential signal formats are incompatible, one or the other must be used between two communicating devices. Currently, if it is desired to change the signal format of a particular SCSI bus, a SCSI controller board in a first device must be replaced with a board that is compatible with the desired signal format employed by the board in a second device. This board swapping solution to the foregoing problem is costly and difficult. Up to eight devices may be daisy-chained together on the SCSI bus and all must have SCSI controllers that use the same signal format because the two signal formats are incompatible. The limit of eight devices is a ramification of a three bit binary encoded address space or target field for the devices.

US-A-4 864 291 discloses a converter for coupling a single-ended and a differential SCSI bus. The converter comprises circuits for dealing with anomalies involved with a SCSI bus signalling scheme causing latch-up of the SCSI bus when two SCSI devices, one using a single-ended signal format and the other a differential format, are contending for control of the bus. Interface circuits for mating a single-ended formatted signal with a differential formatted signal are disclosed.

### SUMMARY OF THE INVENTION

The present invention is defined in claim 1. It solves the foregoing problem by providing an SCSI bus controller comprising, among other components, an adapter module. The adapter module permits the signal format of the host SCSI device, e.g. the computer, to readily and inexpensively match the format of the peripheral device with which it is intended to communicate.

The present invention relates to a processing system, more specifically a general purpose computer, that is coupled to peripheral devices via an industry standard bus. In the preferred embodiment, a SCSI bus is used to couple the computer system and peripherals. The SCSI standard allows for two different implementations ofthe SCSI bus, which are the single-ended and differential signal formats. Each format permits a different maximum length for the cables used to implement that version of the SCSI bus. To allow the computer greater flexibility and cost savings, one of two unique adapter cards is used to allow the computer's SCSI bus controller to be adapted to either the single-ended or differential signal format as desired.

The computer system contains one or more SCSI bus controller boards, the number of which is not limited by the invention, which are used to communicate with peripheral devices. In the preferred embodiment, each SCSI controller board has the capacity to control two independent SCSI buses. To communicate with other components in the computer, such as a CPU, the SCSI controller board is coupled to the computer's main system bus with connectors, memory, and logic. Instructions and data, from the CPU for example, pass through this assembly of connectors, memory, and logic which use this information to initiate SCSI bus transactions from a first SCSI bus controller chip in the computer to a second such chip in a peripheral. For example, the SCSI bus chip in the computer uses the single-ended signal format and the corresponding chip in the peripheral uses the differential signal format. The SCSI bus chip in the computer passes its SCSI bus signals through a SCSI adapter card. The adapter card required for the described CPU and peripheral is one that converts single-ended signals to differential signals. The adapter card contains driver and receiver circuitry to allow data and instructions to pass between the SCSI controller board and the peripheral device in a compatible signal format. The adapter card is mounted on a controller board with two male connectors on the adapter card that mate with two female connectors on the SCSI controller board.

The instant invention employs a single-ended signal format SCSI controller chip mounted on a SCSI controller card. Two different adapter cards of the present invention enable the single-ended SCSI controller chip to couple to a single-ended SCSI bus or a differential SCSI bus, respectively. Another envisioned embodiment of the invention enables coupling a differential signal format SCSI bus controller chip to a single-ended SCSI bus or a differential SCSI bus respectively, by employing two additional SCSI adapter boards. The use of a differential SCSI controller chip and two additional SCSI adapter boards was not practical to implement because no differential SCSI controller chip was known to exist and therefore is not described.

It is thus an object of the invention to selectively adapt a SCSI bus controller to either single-ended or differential signal format SCSI buses.

It is a another object of the invention to solve in a cost effective manner the above described format incompatibility problem between SCSI bus controllers in different devices.

It is a further object of the invention to provide ease of use and flexibility in the solution of format compatibility problems.

It is also an object to facilitate placement and movement of peripheral devices by effecting a signal format change to allow a longer cable length, thus enabling a peripheral device to be placed at a greater distance away from a computer than originally permitted.

Other objects and advantages of the present invention will be understood by those of ordinary skill in the art.

### BRIEF DESCRIPTION OF THE DRAWINGS

A further understanding of the invention may be had from a consideration of the following detailed description, taken in conjunction with the accompanying drawings, in which:

FIG. 1 is a block diagram of a data processing system, e.g. a digital computer system, according to the present invention, that contains one or more SCSI bus controller boards, each SCSI bus controller board having two adapter cards mounted on it (one is hidden behind the other in this view) allowing the computer to communicate to various devices over differential or single-ended SCSI buses.

FIG. 2 is a simplified plan view of the SCSI bus controller board, shown in Fig. 1, having two separate and independent SCSI control circuits and employing two novel adapter cards according to this invention. Also shown, in plan view, are two SCSI bus cables for coupling the SCSI circuits on the SCSI bus controller boards in the computer to compatible SCSI boards (or circuits) in peripheral devices (not shown in this view) associated with the computer.

FIG. 3 is an exploded, side view of an adapter card (shown in the previous figures) adjacent to a SCSI controller board illustrating the alignment of the mating connectors on the card and board.

FIG. 4 is an electrical diagram of the circuits used for a differentially driven SCSI bus. Also shown are plan views of a SCSI bus controller chip on a SCSI board in the computer, and a compatible differentially driven SCSI peripheral device.

FIG. 5 is an electrical diagram of the circuits of Fig. 3 used for a single ended SCSI bus. Also shown are plan views of a SCSI bus controller chip on a SCSI board in the computer, and a compatible single-endedly driven SCSI peripheral device.

### DESCRIPTION OF THE PREFERRED EMBODIMENT

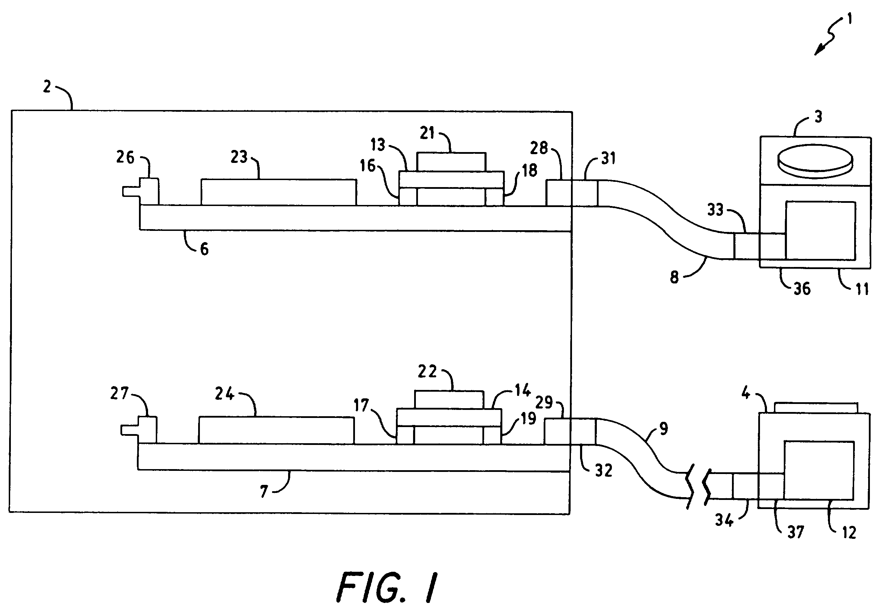

An embodiment of the present invention is illustrated by the processing system **1**, a general purpose computer system, shown in Fig. 1. The processing system **1** includes a computer **2**, for example a Wang VS5000 minicomputer, and its peripherals which include a SCSI disk drive **3** and a SCSI image or document scanner **4**. As explained earlier, the term SCSI is an acronym for Small Computer System Interface that defines a standard interface and protocol for digital devices to communicate with each other. The organization and operation of a SCSI bus discussed here is defined by American National Standards Institute (ANSI) SCSI-1 Specification X3T9.2 Rev. 17B and elsewhere.

The computer **2** is coupled to the SCSI disk drive **3** and the SCSI scanner **4** by means of SCSI controller boards **6** and **7** and SCSI cables **8** and **9**, respectively. Cable **9** is longer than cable **8**. Cable **8** is a single-ended SCSI bus cable and, as such, is six meters (approximately twenty feet) or less in length. Cable **9** is a differential SCSI bus cable and, as such, is twenty five meters (approximately eighty-two feet) or less in length. The present invention enables a standard SCSI controller board to mate with a peripheral having an incompatible SCSI controller board, for example board **11** in the disk drive or board **12** in the scanner.

The SCSI standard allows for a signal transmitted to a peripheral to be electrically referenced to ground (a "single-ended signal") or referenced to a logical inversion of itself (a "differential signal"). This means, however, that each SCSI controller board must be coupled to a peripheral that uses the same signal format. For example, since board **6** in the computer **2** provides a single-ended signal for transmission to the disk drive **3**, the controller **11** in the disk drive **3** must be able to respond to single-ended signals. Likewise, since board **7** provides differential signals for transmission to the scanner **4**, the controller **12** in the scanner must be able to respond to differential signals.

The number of SCSI controller boards is not limited to the two shown. The computer **2** in Fig. 1 may contain only a single SCSI controller board or more than the number of SCSI controller boards depicted. The number of SCSI controller boards, such as boards **6** and **7**, is limited, to a degree, by the amount of available space in the computer **2**, and the need for a given number of SCSI peripherals.

Still referring to Fig. 1, SCSI controller boards **6** and **7** include SCSI adapter cards **13** and **14** that enable the controllers to be switched between a single-ended and a differential signal operation. The adapter cards come in two varieties, namely single-ended and differential. The purpose of the adapters is to permit a SCSI controller board to be switched from a single-ended to a differential SCSI bus, and vice versa, depending on whether the single-ended or differential format adapter card is used.

The adapter cards **13** and **14** are mounted to their respective SCSI controller boards **6** and **7** with 44-pin connectors **16** and **17** and 50-pin connectors **18** and **19**, respectively. Connectors **16, 17, 18** and **19** provide physical and electrical coupling between their respective SCSI controller boards and the adapter cards. The adapter cards have appropriate adapter circuitry **21** and **22** to facilitate single-ended or differential communications. This circuitry includes line drivers, line receivers, buffers, capacitors, and resistors.

SCSI boards **6** and **7** also include control circuitry **23** and **24** respectively, that include a programmable microprocessor, RAM memory, registers, drivers, receivers, buffers, capacitors, resistors, conductors, and the like that are programmed to send and receive commands and data to and from peripherals **3** and **4**, respectively. Circuitry **23** and **24** also couple the boards **6** and **7** to the computer **2**. The boards **6** and **7** are functionally coupled to the computer **2** through connectors **26** and **27**, respectively.

Computer **2** is functionally coupled to the disk drive and the scanner by electrical paths that include a bus for transmission of addresses, data, and commands. Cables **8** and **9** electrically couple the two peripherals shown to the computer. Connectors **26** and **27** couple the SCSI boards **6** and **7** to the computer's system bus and connectors **28** and **29** couple the boards to cables **8** and **9**. In the disk drive, connectors **33** and **36** couple the cable **8** to SCSI board **11**. Similarly, connectors **34** and **37** couple cable **9** to the SCSI board **12** in the scanner.

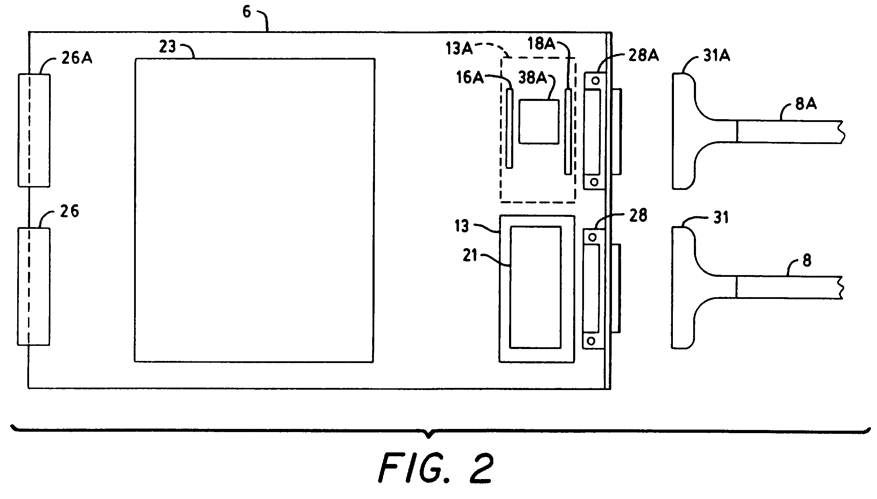

Fig. 2 is a plan view of SCSI board **6** shown in Fig. 1. Boards **6** and **7** are the same except for specific adapter boards that each employs. The following description of board **6** applies as well to board **7**.

SCSI board **6** includes the controller circuitry **23** that includes two SCSI buses, rather than just one as implied from the side view of the board in Fig. 1, because adapter card **13** obstructs our view. Circuitry **23** is a single controller that is appropriately partitioned to mange two separate SCSI buses to which the cables **8A** and **8** are coupled. Board 6 includes provisions for accommodating two adapter boards of the instant invention. Board **13** is shown mounted on board **6** and **13A** is shown in dashed lines to reveal the underlying 44-pin connector **16A**, 50-pin connector **18A**, and the SCSI controller circuitry **38A**.

From a functional point of view, SCSI controller circuitry **38A** is substantially comprised of a single integrated SCSI controller chip, for example a National Cash Register, Inc. (NCR) 53C95 single-ended SCSI bus controller chip, but also includes physically discrete components like resisters and capacitors. Therefore, when any SCSI controller chip, e.g. **38A**, is referred to, the additional components that comprise the SCSI controller circuitry are implicit. It is relevant to note that the NCR chip **38A,** e.g. on the SCSI Controller Board with a differential adapter card in place at adapter card **13A,** is coupled to differential SCSI cable **8A** for communication with a differentially driven SCSI peripheral (not shown). Adapter card **13** is a single-ended adapter card which includes adapter circuitry **21** that functionally couples a single-ended chip located beneath the adapter to single-ended SCSI cable **8** and to a coupled single-ended SCSI controller in a peripheral or other device. The SCSI bus controller chips used are incapable of driving either a differential or single-ended SCSI bus directly, therefore in both cases additional drivers are required to perform that task.

As implied above, the SCSI controller board **6** is able to employ either a single-ended or differential signal compatible adapter cards. This feature offers several useful advantages. For example, a single-ended peripheral like the disk drive **3** is replaced with a differential peripheral like the scanner **4** merely by changing SCSI adapter board **13** to a differentially compatible one, as long as maximum suggested cable lengths are observed. Without the adapter boards the entire controller board **6,** for example, must be replaced to accommodate incompatibility in SCSI signal format between two or more devices.

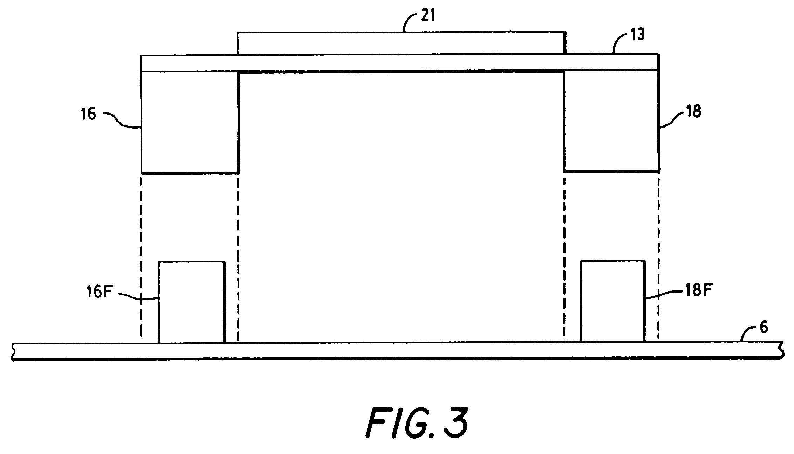

In Fig. 3, we see an exploded side view of a SCSI adapter card, for example **13**, adjacent to the SCSI controller board **6**. The adapter card **13** contains adapter circuitry **21**, a male 44-pin connector **16**, and a male 50-pin connector **18**. The SCSI controller board **6** is physically and electrically connected to female 44-pin connector **16F** and female 50-pin connector **18F**. The adapter card **13** is mounted to the SCSI controller board **6** by bringing the two together such that a physical and electrical connection is made between the male and female 44-pin connectors and the male and female 50-pin connectors. The adapter card **13** is detached from the SCSI controller board **6** by separating the adapter card **13** from the SCSI controller board **6**, thereby splitting the physical and electrical connection of the male and female connectors **16, 16F, 18**, and **18F**. The male connectors **16** and **18** are aligned along the dashed lines to the female connectors **16F** and **18F** suited for installing card **13** to board **6**.

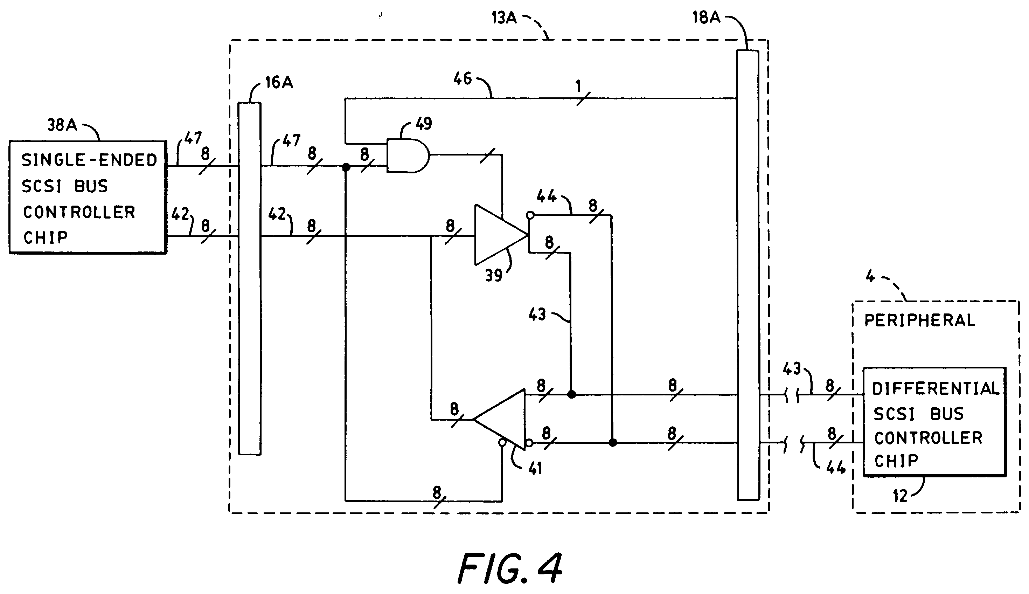

Turning to Fig. 4, a simplified electrical block diagram ofthe differential adapter card **13A** is shown. The adapter card's **13A** eight bit data bus is shown in Fig. 4. In addition to an eight bit bi-directional data bus, the adapter board contains unidirectional and bidirectional control, status, and identification bits not shown in Fig. 4, but listed in Table 1 below. Because each adapter board passes all external input and output signals and power through a 44-pin connector and a 50-pin connector, Table 1 discloses all the external input and output signals for both adapter cards. Both single-ended adapter 44-pin connector and differential adapter 44-pin connector use the same signal on counterpart pins. For example, pin number 21 of the 44-pin connector is SDOP on the single-ended and differential adapter cards. By contrast, 50-pin connectors on single-ended and differential adapter boards respectively conform to the SCSI specification, thereby having different signal assignments.

Signals passing through the differential adapter card **13A** include eight data lines, a parity line, and control lines defined in ANSI SCSI-1 Specification X3T9.2 Rev. 17B. Addresses are passed on the SCSI bus via the data lines, which carry time multiplexed address and data information. The differential adapter card **13** contains output drivers **39** and input receivers **41** which together act as bidirectional driver/receiver pairs for single-ended signals at the 44-pin connector **16A**, and differential signals at the 50-pin connector **18A**. Eight drivers coupled with eight receivers act as eight driver/receiver pairs for the data lines. Some signals defined by the SCSI specification are unidirectional, that is these signals are either driven from or received by the SCSI adapter card, but not both. The unidirectional signals use either an appropriate driver or receiver as required, these drivers and receivers being the same type as used together for the data lines.

Pin number 42 of both 44-pin connectors described in Table 1 carries a signal named BRD_ID. The BRD_ID signal is not defined in the ANSI SCSI specification and was added to indicate the format of a coupled adapter card to the SCSI controller board it is coupled to. When the BRD_ID is at a logical low value this indicates that if an adapter card is present it is differential signal compatible. When the BRD_ID is at a logical high value this indicates that if an adapter card is present it is single-ended signal compatible.

On pin number 41 of both 44-pin connectors described in Table 1 is a signal named ∼TERMPWR. The ∼TERMPWR is a logical inversion of a signal named TERMPWR which is defined in the aforementioned ANSI SCSI specification to provide power to coupled SCSI devices to terminate their signals. Without any adapter card coupled to the SCSI controller board, a pull-up resister on the ∼TERMPWR signal causes the signal to be forced to a logical high value. With either a single-ended or differential adapter card coupled to the SCSI controller board, the ∼TERMPWR signal is forced to a logical low value.

The BRD_ID signal is used in conjunction with ∼TERMPWR to provide information on the presence of an adapter board coupled to a SCSI controller board. Whenever the ∼TERMPWR signal is logically low, this indicates that a functional adapter card is coupled to a SCSI controller board and the BRD_ID signal is considered to be a valid indicator of the type of adapter card it is. Whenever the ∼TERMPWR signal is logically high, this indicates that BRD_ID is not a valid signal and that there is not a fully functional adapter card coupled to that particular SCSI controller board position.

Note that the pin numbering and assignments (pinout) are defined in the SCSI specification for the single-ended and differential 50-Pin connectors.

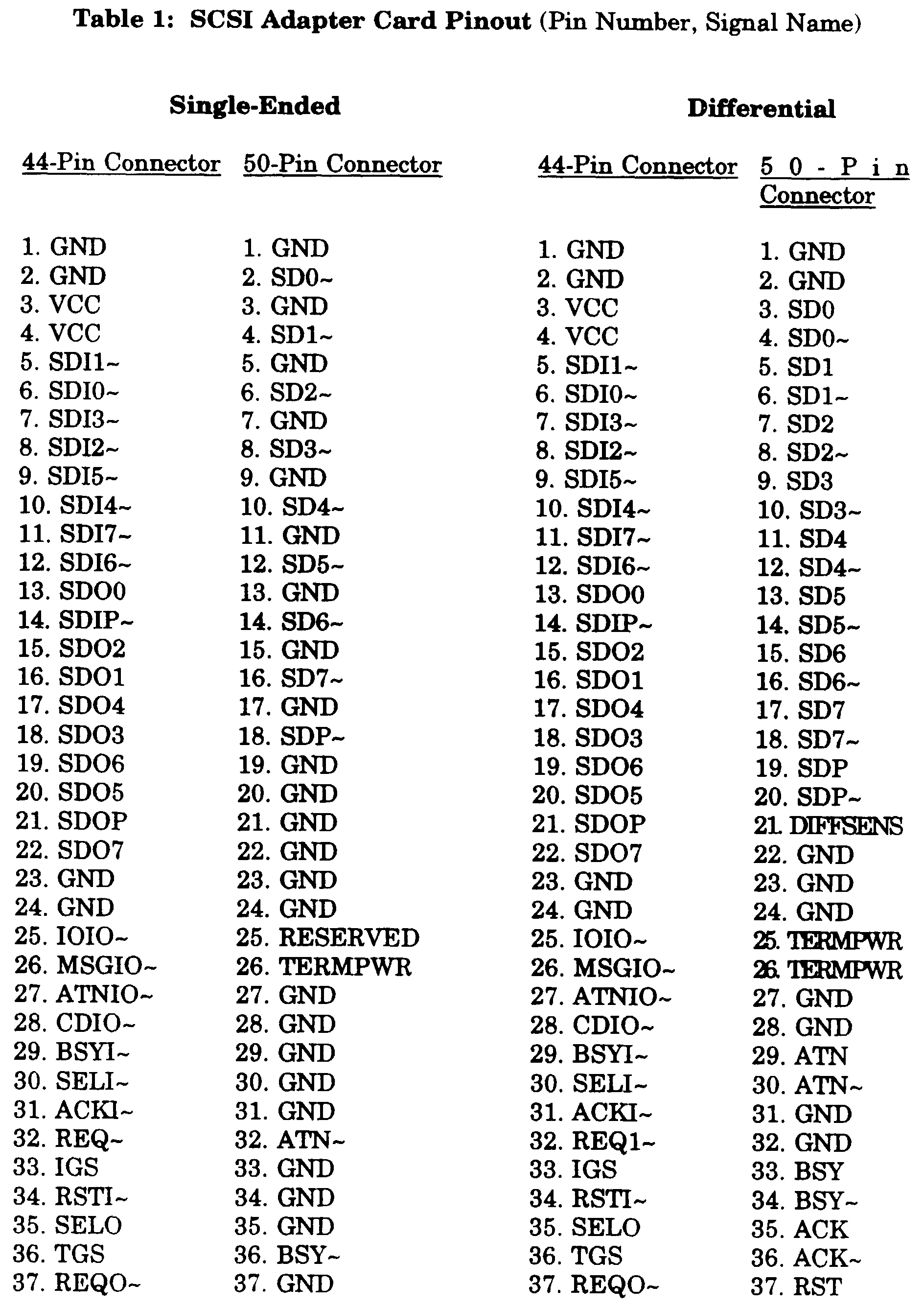

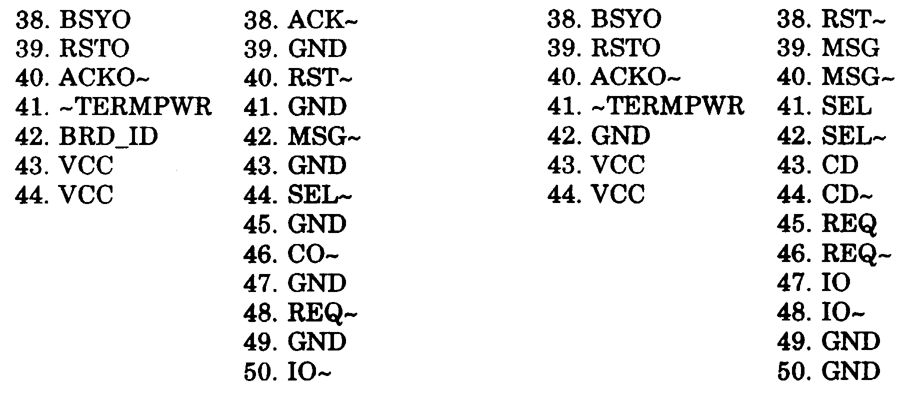

Single-ended signals are passed from the NCR 53C95 single-ended SCSI bus control chip in circuitry **38A** through the 44-pin connector **16A** to data lines **42** and on to the output drivers **39**. The data lines **42** are bidirectional. At the output of the drivers **39**, the single-ended signals on the data lines **42** are passed in a non-inverted form towards a peripheral over lines **43** at the output of the driver. In addition, the output drivers **39** invert signals on data lines **42** and passes them towards the peripheral on lines **44**.

Differential signals return from coupled differential peripherals like the SCSI scanner **4** through the 50-pin connector **18A** to the input receivers **41** over non-inverted **43** and inverted **44** SCSI lines. At the input receivers **41** differential signals are converted to a single-ended format and driven onto the data lines **42**.

Because data can only be transferred in one direction at a time, it is not useful to have the output drivers **39** and the input receivers **41** enabled at the same time, therefore either one or the other is enabled. Enabling and disabling of the output drivers **39** is accomplished via ANDing (as in Boolean logic) differential sensing line **46** with each of the direction control lines **47** to form ANDed driver enable lines **48**, using And gates **49**. Enabling and disabling of the input receivers **41** is achieved by coupling the direction control lines **47** to it. Because the output drivers **39** are enabled active-high and the input receivers **41** are enabled active-low the direction control lines **47** can only enable either the output drivers **39** or the input receivers **41**, but not both at the same time.

The direction control lines **47** are coupled to the NCR 53C95 single-ended SCSI bus control chip **38A** on the SCSI controller board **6** which provides appropriate control signals. The differential sensing line **46** carries an active-high signal, known as DIFFSENS in the ANSI SCSI Specification, which is logically high when a differential SCSI bus is coupled to it and is logically low when a single-ended SCSI bus is coupled to it. The output drivers **39** are enabled by the driver enable line **48** when it carries a High signal, and is disabled when the driver enable line **48** carries a Low signal. This means that when a single-ended SCSI bus is coupled to the differential adapter card **13A** the output drivers **39** on that board are automatically disabled. This was done to protect the output drivers **39** from electrical damage if a single-ended SCSI bus were to be coupled to it.

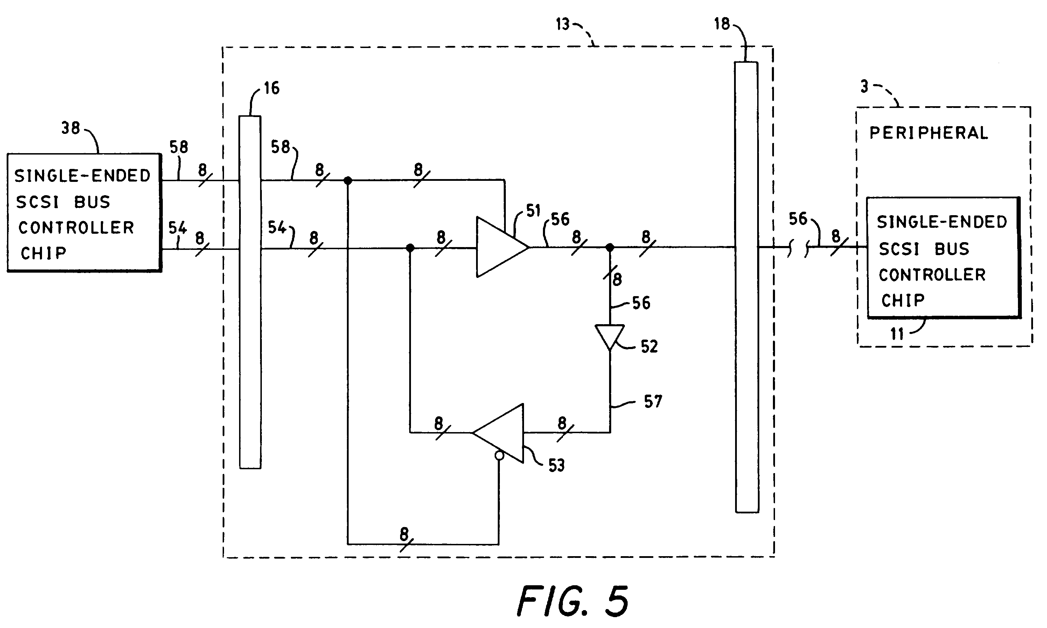

In Fig. 5 we see an partial electrical block diagram of an eight bit data bus of the single-ended adapter card **13,** analogous to Fig. 4. The 44-pin connector **16** and the 50-pin connector **18** provide all necessary signal coupling to bring signals into and out of the single-ended adapter card **13.** The single-ended adapter card **13** contains output drivers **51,** input receivers **52,** and input drivers **53** which together act as bidirectional driver/receiver pairs with single-ended signals coupled to the 44-pin connector **16** side as well as the 50-pin connector **18** side.

Eight single-ended data signals are passed from the SCSI bus control chip **38** through the 44-pin connector **16** to data lines **54** and on to the output drivers **51.** The data lines **54** are bidirectional. At the output drivers **51,** single-ended signals are transmitted onto SCSI lines **56,** which are bidirectional.

Single-ended signals return from coupled single-ended peripherals like the SCSI disk drive **3** through the 50-pin connector **18** to the input receivers **52** over SCSI lines **56.** The input receivers **52** take single-ended signals from the SCSI lines **56** and drive them through internal SCSI lines **57** to the input drivers **53.** The input drivers transmit their signals onto the data lines **54.** The input receivers were placed between the SCSI lines **56** and the input drivers **53** to provide electrical characteristics better suited to receiving single-ended SCSI bus signals.

Because data can only be transferred in one direction at a time, it is not useful to have the output drivers **51** and the input drivers **53** enabled at the same time, therefore either one or the other is enabled. Enabling and disabling of the output drivers **51** is accomplished by coupling direction control lines **58** to them. Enabling and disabling of the input drivers **53** is achieved by coupling the same direction control lines **58** to them. Because the output drivers **51** are enabled active-high and the input drivers **53** are enabled active-low the direction control line **58** can only enable either the output drivers **51** or the input drivers **53,** but not both at the same time.

Other variations and modification to the foregoing embodiments of the invention are apparent to those of ordinary skill in the art. For example, the location of various components on the controller board could be different. Also, as another example, a single adapter card could include single-ended and differential adapter circuitry and have a switch or other means for matching the specific signal format used by the SCSI controller chip employed by a given device.

## Claims

1. A SCSI controller for facilitating communications between a host computer (2) and a SCSI peripheral device (3, 4),
said SCSI controller being adapted for sending and receiving SCSI input/output (I/O) electrical signals in one or both of two different electrical signal formats consisting of a single-ended format and a differential format,
**characterized** by
a printed circuit board (6, 7) including a computer input connector (26, 26A, 27) for coupling said printed circuit board (6, 7) to said host computer (2) and a SCSI peripheral output connector (28, 28A, 29) for coupling said printed circuit board (6, 7) to said SCSI peripheral device (3, 4),
SCSI controller logic means (23, 24) mechanically coupled to said printed circuit board (6, 7), electrically coupled to said computer through said computer input connector (26, 26A, 27), and adapted for sending and receiving SCSI I/O signals to and from said SCSI peripheral device (3, 4),
a SCSI chip circuit (38, 38A) mechanically coupled to said printed circuit board (6, 7), electrically coupled to said SCSI controller logic means (23, 24), and adapted for processing SCSI I/O signals in a first of said two signal formats, and
a SCSI adapter module (13, 13A, 14) replaceably coupled, mechanically, to said printed circuit board (6, 7), electrically coupled to said SCSI chip circuit (38, 38A) and to said SCSI peripheral output connector (28, 28A, 29), and adapted for reformatting SCSI I/O signals transmitted from said SCSI chip circuit (38, 38A) to said peripheral device (3, 4) from said first of said two signal formats into a second of said two signal formats and for reformatting SCSI I/O signals received from said peripheral device (3, 4) from said second of said two signal formats into said first of said two signal formats.

2. The SCSI controller of claim 1 wherein said SCSI adapter module (13, 13A, 14) has been replaced by an SCSI adapter module (13, 13A, 14) transmitting and receiving SCSI I/O signals in said first of said two signal formats for use with a SCSI peripheral device (3, 4) which has the same SCSI I/O signal format as said SCSI chip circuit (38, 38A).

3. The SCSI controller of claim 2 wherein said first SCSI I/O signal format of said SCSI chip circuit (38, 38A) and of said SCSI peripheral device (3, 4) is said single ended format.

4. The SCSI controller of claim 2 wherein said first SCSI I/O signal format of said SCSI chip circuit (38, 38A) and of said SCSI peripheral device (3, 4) is said differential format.

5. The SCSI controller of claim 1 wherein said first SCSI I/O signal format of said SCSI chip circuit (38, 38A) is said single-ended format and wherein said SCSI adapter module (13, 13A, 14) reformats single-ended format SCSI I/O signals transmitted to said peripheral device (3, 4) into said differential format and reformats differential format SCSI I/O signals received from said peripheral device (3, 4) into said single-ended format.

6. The SCSI controller of claim 1 wherein said first SCSI I/O signal format of said SCSI chip circuit (38, 38A) is said differential format and wherein said SCSI adapter module (13, 13A, 14) reformats differential format SCSI I/O signals transmitted to said peripheral device (3, 4) into said single-ended format and reformats single-ended format SCSI I/O signals received from said peripheral device (3, 4) into said differential format.

7. The SCSI controller of claim 1 wherein
said SCSI controller logic means (23, 24) further includes first and second SCSI I/O bus portions with the first SCSI I/O bus portion coupled to said SCSI chip circuit (38) and the second SCSI I/O bus portion coupled to a further SCSI chip circuit (38A),
and further including a further SCSI adapter module (13A) replaceably coupled, mechanically, to said printed circuit board (6, 7), electrically coupled to said further SCSI chip circuit (38A) and to a further SCSI peripheral output connector (28A), and adapted for reformatting SCSI I/O signals transmitted from said further SCSI chip circuit (38A) to a further peripheral device (4) from said second of said two signal formats into said first of said two signal formats and for reformatting SCSI I/O signals received from said further peripheral device (4) from said first of said two signal formats into said second of said two signal formats.

## Patentansprüche

1. SCSI-Controller für den Datenaustausch zwischen einem Hauptrechner (2) und einem SCSI-Peripheriegerät (3, 4),
wobei der SCSI-Controller elektrische SCSI-Ein/Ausgangs(E/A)-Signale in einem von zwei unterschiedlichen Formaten der elektrischen Signale, die ein unsymmetrisches und ein differentielles Format umfassen, oder in diesen beiden Formaten zu senden und zu empfangen vermag,
gekennzeichnet durch
- eine Leiterplatte (6, 7) mit einem Rechnereingangsverbinder (26, 26A, 27) zum Verbinden der Leiterplatte (6, 7) mit dem Hauptrechner (2) und einem SCSI-Peripherieausgangsverbinder (28, 28A, 29) zum Verbinden der Leiterplatte (6, 7) mit dem SCSI-Peripheriegerät (3, 4),
- einer SCSI-Steuerlogikeinrichtung (23, 24), die mit der Leiterplatte (6, 7) mechanisch verbunden ist, mit dem Rechner über den Rechnereingangsverbinder (26, 26A, 27) elektrisch verbunden ist und SCSI-E/A-Signale zum SCSI-Peripheriegerät (3, 4) zu senden und von ihm zu empfangen vermag,
- eine SCSI-Chipschaltung (38, 38A), die mit der Leiterplatte (6, 7) mechanisch verbunden ist, mit der SCSI-Steuerlogikeinrichtung (23, 24) elektrisch verbunden ist und SCSI-E/A-Signale in einem ersten der beiden Signalformate zu verarbeiten vermag, und
- ein SCSI-Adaptermodul (13, 13A, 14), das austauschbar mit der Leiterplatte (6, 7) mechanisch verbunden ist, mit der SCSI-Chipschaltung (38, 38A) und dem SCSI-Peripherieausgangsverbinder (28, 28A, 29) elektrisch verbunden ist und SCSI-E/A-Signale, die von der SCSI-Chipschaltung (38, 38A) zum Peripheriegerät (3, 4) übermittelt werden, aus dem ersten der beiden Signalformate in ein zweites der beiden Signalformate und SCSI-E/A-Signale, die vom Peripheriegerät (3, 4) empfangen werden, vom zweiten der beiden Signalformate in das erste der beiden Signalformate umzuformatieren vermag.

2. SCSI-Controller nach Anspruch 1,
bei dem das SCSI-Adaptermodul (13, 13A, 14) durch ein SCSI-Adaptermodul (13, 13A, 14), das SCSI-E/A-Signale in dem ersten der beiden Signalformate übermittelt und empfängt, zur Verwendung mit einem SCSI-Peripheriegerät (3, 4) ersetzt worden ist, welches mit dem gleichen SCSI-E/A-Signalformat wie die SCSI-Chipschaltung (38, 38A) arbeitet.

3. SCSI-Controller nach Anspruch 2,
bei dem das erste SCSI-E/A-Signalformat der SCSI-Chipschaltung (38, 38A) und des SCSI-Peripheriegerätes (3, 4) das unsymmetrische Format ist.

4. SCSI-Controller nach Anspruch 2,
bei dem das erste SCSI-E/A-Signalformat der SCSI-Chipschaltung (38, 38A) und des SCSI-Peripheriegerätes (3, 4) das differentielle Format ist.

5. SCSI-Controller nach Anspruch 1,
bei dem das erste SCSI-E/A-Signalformat der SCSI-Chipschaltung (38, 38A) das unsymmetrische Format ist, und das SCSI-Adaptermodul (13, 13A, 14) SCSI-E/A-Signale im unsymmetrischen Format, die an das Peripheriegerät (3, 4) übermittelt werden, in das differentielle Format und SCSI-E/A-Signale im differentiellen Format, die vom Peripheriegerät (3, 4) empfangen werden, in das unsymmetrische Format umformatiert.

6. SCSI-Controller nach Anspruch 1,
bei dem das erste SCSI-E/A-Signalformat der SCSI-Chipschaltung (38, 38A) das differentielle Format ist, und das SCSI-Adaptermodul (13, 13A, 14) SCSI-E/A-Signale im differentiellen Format, die an das Peripheriegerät (3, 4) übermittelt werden, in das unsymmetrische Format und SCSI-E/A-Signale im unsymmetrischen Format, die vom Peripheriegerät (3, 4) empfangen werden, in das differentielle Format umformatiert.

7. SCSI-Controller nach Anspruch 1, bei dem
- die SCSI-Steuerlogikeinrichtung (23, 24) ferner erste und zweite SCSI-E/A-Busabschnitte umfaßt, von denen der erste SCSI-E/A-Busabschnitt mit der SCSI-Chipschaltung (38) und der zweite SCSI-E/A-Busabschnitt mit einer weiteren SCSI-Chipschaltung (38A) verbunden ist, und
- ferner mit einem weiteren SCSI-Adaptermodul (13A), das austauschbar mit der Leiterplatte (6, 7) mechanisch verbunden ist, mit der genannten weiteren SCSI-Chipschaltung (38A) und einem weiteren SCSI-Peripherieausgangsverbinder (28A) elektrisch verbunden ist, und SCSI-E/A-Signale, die von der weiteren SCSI-Chipschaltung (38A) an ein weiteres Peripheriegerät (4) übermittelt werden, vom zweiten der beiden Signalformate in das erste der beiden Signalformate und SCSI-E/A-Signale, die von dem weiteren Peripheriegerät (4) empfangen werden, vom ersten der beiden Signalformate in das zweite der beiden Signalformate umzuformatieren vermag.

## Revendications

1. Contrôleur SCSI pour faciliter les communications entre un ordinateur hôte (2) et un dispositif périphérique SCSI (3, 4),
ledit contrôleur SCSI pouvant envoyer et recevoir des signaux électriques SCSI d'entrée / sortie (E/S) dans un des ou dans les deux formats de signaux électriques différents consistant en un format asymétrique et un format différentiel,
caractérisé par
une carte à circuit imprimé (6, 7) comprenant un connecteur d'entrée d'ordinateur (26, 26A, 27) pour coupler ladite carte à circuit imprimé (6, 7) audit ordinateur hôte (2) et un connecteur de sortie de périphérique SCSI (28, 28A, 29) pour coupler ladite carte à circuit imprimé (6, 7) audit dispositif périphérique SCSI (3, 4),
des moyens logiques de contrôleur SCSI (23, 24) couplés mécaniquement à ladite carte à circuit imprimé (6, 7), couplés électriquement audit ordinateur par ledit connecteur d'entrée d'ordinateur (26, 26A, 27), et pouvant envoyer et recevoir des signaux d'E/S SCSI audit et dudit dispositif périphérique SCSI (3, 4),
un circuit à puce SCSI (38, 38A) couplé mécaniquement à ladite carte à circuit imprimé (6, 7), couplé électriquement auxdits moyens logiques de contrôleur SCSI (23, 24), et pouvant traiter des signaux d'E/S SCSI dans un premier desdits deux formats de signaux, et
un module d'adaptateur SCSI (13, 13A, 14) couplé de façon amovible, mécaniquement, à ladite carte à circuit imprimé (6, 7), couplé électriquement audit circuit à puce SCSI (38, 38A) et audit connecteur de sortie de périphérique SCSI (28, 28A, 29), et pouvant reformater les signaux d'E/S SCSI transmis dudit circuit à puce SCSI (38, 38A) audit dispositif périphérique (3, 4) dudit premier desdits deux formats de signaux en le second desdits deux formats de signaux et reformater les signaux d'E/S SCSI reçus dudit dispositif périphérique (3, 4) dudit second desdits deux formats de signaux en ledit premier desdits deux formats de signaux.

2. Contrôleur SCSI selon la revendication 1 dans lequel ledit module d'adaptateur SCSI (13, 13A, 14) a été remplacé par un module d'adaptateur SCSI (13, 13A, 14) transmettant et recevant les signaux d'E/S SCSI dans ledit premier desdits deux formats de signaux pour l'utilisation avec un dispositif périphérique SCSI (3, 4) qui ait le même format de signaux d'E/S SCSI que ledit circuit à puce SCSI (38, 38A).

3. Contrôleur SCSI selon la revendication 2 dans lequel ledit premier format de signaux d'E/S SCSI dudit circuit à puce SCSI (38, 38A) et dudit dispositif périphérique SCSI (3, 4) est ledit format asymétrique.

4. Contrôleur SCSI selon la revendication 2 dans lequel ledit premier format de signaux d'E/S SCSI dudit circuit à puce SCSI (38, 38A) et dudit dispositif périphérique SCSI (3, 4) est ledit format différentiel.

5. Contrôleur SCSI selon la revendication 1 dans lequel ledit premier format de signaux d'E/S SCSI dudit circuit à puce SCSI (38, 38A) est ledit format asymétrique et dans lequel ledit module d'adaptateur SCSI (13, 13A, 14) reformate les signaux d'E/S SCSI de format asymétrique transmis audit dispositif périphérique (3, 4) en ledit format différentiel et reformate les signaux d'E/S SCSI de format différentiel reçus dudit dispositif périphérique (3, 4) en ledit format asymétrique.

6. Contrôleur SCSI selon la revendication 1 dans lequel ledit premier format de signaux d'E/S SCSI dudit circuit à puce SCSI (38, 38A) est ledit format différentiel et dans lequel ledit module d'adaptateur SCSI (13, 13A, 14) reformate les signaux d'E/S SCSI de format différentiel transmis audit dispositif périphérique (3, 4) en ledit format asymétrique et reformate les signaux d'E/S SCSI de format asymétrique reçus dudit dispositif périphérique (3, 4) en ledit format différentiel.

7. Contrôleur SCSI selon la revendication 1 dans lequel
lesdits moyens logiques de contrôleur SCSI (23, 24) comprennent de plus des première et seconde parties de bus d'E/S SCSI, la première partie de bus d'E/S SCSI étant couplée audit circuit à puce SCSI (38) et la seconde partie de bus d'E/S SCSI étant couplée à un circuit à puce SCSI supplémentaire (38A),
et comprenant de plus un module d'adaptateur SCSI supplémentaire (13A) couplé de façon amovible, mécaniquement, à ladite carte à circuit imprimé (6, 7), couplé électriquement audit circuit à puce SCSI supplémentaire (38A) et à un connecteur de sortie de périphérique SCSI supplémentaire (28A), et pouvant reformater les signaux d'E/S SCSI transmis dudit circuit à puce SCSI supplémentaire (38A) à un dispositif périphérique supplémentaire (4) dudit second desdits deux formats de signaux en ledit premier desdits deux formats de signaux et pouvant reformater les signaux d'E/S SCSI reçus dudit dispositif périphérique supplémentaire (4) dudit premier desdits deux formats de signaux en ledit second desdits deux formats de signaux.
